Europäisches Patentamt

European Patent Office

Office européen des brevets

(11) Numéro de publication: **0 261 635 B1**

(12) **FASCICULE DE BREVET EUROPEEN**

(45) Date de publication de fascicule du brevet: **11.03.92**  (51) Int. Cl.⁵: **H02K  55/04**

(21) Numéro de dépôt: **87113818.6**

(22) Date de dépôt: **22.09.87**

(54) **Machine électrique tournante supraconductrice et son isolement thermique.**

(30) Priorité: **25.09.86 FR 8613406**

(43) Date de publication de la demande:
**30.03.88 Bulletin  88/13**

(45) Mention de la délivrance du brevet:
**11.03.92 Bulletin  92/11**

(84) Etats contractants désignés:
**AT BE CH DE ES FR GB GR IT LI LU NL SE**

(56) Documents cités:
**FR-A- 2 235 518**
**FR-A- 2 372 535**
**GB-A- 1 050 521**
**GB-A- 1 282 412**
**US-A- 3 577 024**

(73) Titulaire: **GEC ALSTHOM SA**
**38, avenue Kléber**
**F-75116 Paris(FR)**

(72) Inventeur: **Brunet, Yves**
**24 rue Jean-Jaurès**
**F-38610 Gieres(FR)**
Inventeur: **Tixador, Pascal**
**16 rue Condorcet**
**F-38000 Grenoble(FR)**

(74) Mandataire: **Weinmiller, Jürgen et al**
**Lennéstrasse 9 Postfach 24**
**W-8133 Feldafing(DE)**

## Description

La présente invention concerne des machines électriques tournantes ayant un stator et un rotor supraconducteurs.

Dans ce genre de machine, les enroulements du stator et du rotor sont disposés dans des enceintes cryogéniques distinctes isolées thermiquement et séparées par un volume d'entrefer sous vide pour réduire au maximum les apports thermiques.

Le maintien d'un vide poussé dans l'entrefer nécessite des joints tournants d'une excellente étanchéité très difficiles à réaliser en pratique.

Pour tourner cette difficulté, il est connu par la demande de brevet français nº 2 372 535 de compléter les joints tournants, placés au voisinage des paliers supportant le rotor, par un système de pompe à vide formé de deux jeux concentriques de viroles à orifices, emboîtés l'un dans l'autre et solidaire l'un de la partie fixe, l'autre de la partie tournante du moteur. Cette disposition permet de réduire les performances d'étanchéité demandées aux joints tournants en les plaçant en aval d'une pompe assurant le vide le plus poussé mais au prix d'une augmentation importante de la complexité de la structure de la machine au voisinage de ses paliers.

La présente invention a pour but d'éviter la difficulté précitée en conservant une structure simple pour la machine tournante.

On connaît d'autre part, par GB-A-1 282 412, une machine électrique tournante ayant un stator dont l'enroulement est refroidi à très basse température, et un rotor contenant un enroulement supraconducteur refroidi par un fluide cryogénique, une enceinte annulaire d'isolement thermique sous vide entourant le rotor. L'enceinte rotorique est séparée de l'enceinte statorique par un volume d'entrefer à très faible pression.

La machine électrique tournante selon l'invention a un stator et un rotor à enroulements supraconducteurs disposés dans des enceintes cryogéniques distinctes pour le rotor et le stator, elles-mêmes placées dans des enceintes d'isolement thermique séparées par un volume d'entrefer à basse pression ce qui simplifie considérablement les problèmes d'étanchéité dynamique rencontrés jusqu'alors.

L'enceinte d'isolement thermique renfermant l'enceinte cryogénique statorique est séparée du volume d'entrefer par une cloison tubulaire fixée en bout à deux flasques statiques d'extrémité de la machine grâce à des moyens tolérant une dilatation axiale tels qu'un joint à piston. Cette cloison tubulaire peut être étanche, l'enceinte d'isolement thermique du stator étant entièrement sous vide, ou non étanche, l'enceinte d'isolement thermique du stator présentant alors une chambre intérieure renfermant l'enceinte cryogénique, remplie d'un matériau en poudre, fibres ou mousse réduisant la conductibilité thermique axiale, et une chambre extérieure sous vide.

L'invention a donc pour objet une machine électrique tournante ayant un stator et un rotor à enroulements supraconducteurs disposés dans des enceintes cryogéniques distinctes, caractérisée en ce que :
- les enceintes cryogéniques du stator et du rotor sont disposées chacune à l'intérieur d'une enceinte d'isolement thermique sous vide,
- l'ensemble constitué par les enceintes d'isolement thermique est disposé à l'intérieur d'une enveloppe pourvue de flasques d'extrémité afin d'isoler l'intérieur de l'enveloppe,
- les enceintes d'isolement thermique du stator et du rotor sont séparées par un volume d'entrefer à basse pression.

Le volume d'entrefer peut être délimité, côté rotor, par un tambour supportant une double vis d'archimède tendant lorsque le rotor tourne, à refluer les gaz remplissant le volume d'entrefer, vers les extrémités de la machine pour les évacuer de l'espace séparant les enceintes cryogéniques statorique et rotorique et limiter les apports thermiques. Il est avantageusement rempli de vapeurs d'hélium à une pression de 1 à 10 Pascals.

D'autres caractéristiques et avantages de l'invention ressortiront de la description ci-après d'exemples de réalisation. Cette description sera faite en regard du dessin dans lequel :
- les figures 1, 2 et 3 sont des vues longitudinales, en coupe partielle, de machines selon l'invention et
- la figure 4 est une coupe longitudinale partielle d'un élément de structure des machines représentée aux figures précédentes.

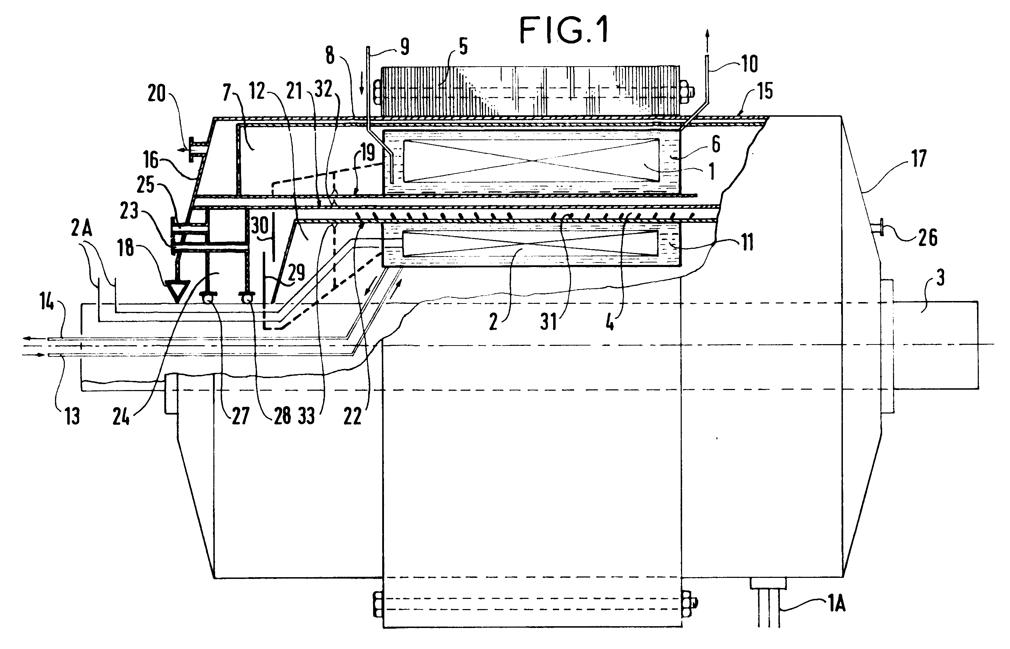

La machine représentée à la figure 1 comporte des enroulements statoriques triphasés 1 en matériau supraconducteur et des enroulements rotoriques 2 également supraconducteurs. Du stator partent des conducteurs triphasés 1A vers une alimentation ou une utilisation extérieure selon que la machine considérée est utilisée en moteur ou en alternateur. Le rotor est porté par un arbre tournant 3. Ses enroulements sont reliés à une alimentation extérieure par des conducteurs 2A. Sa périphérie est séparée du stator par un volume d'entrefer 4. Autour du stator est disposée une couronne magnétique 5 en tôles feuilletées empêchant le flux magnétique de sortir de la machine.

Les enroulements statoriques sont disposés dans une enceinte cryogénique 6 remplie d'hélium à 4,2 K, elle-même entourée d'une enceinte d'isolement thermique sous vide 7 dans laquelle est placé un écran thermique antiradiatif 8 formé par exemple de feuilles réfléchissantes séparées par des voiles isolants. L'hélium liquide est introduit dans l'enceinte cryogénique statorique 6 par un conduit 9 et les vapeurs d'hélium formées sont évacuées par un conduit 10.

Les enroulements rotoriques sont disposés dans une enceinte cryogénique 11, elle-même entourée d'une enceinte d'isolement thermique sous vide 12. L'hélium circule dans l'enceinte cryogénique rotorique 11 à l'état liquide, au-dessus de sa pression critique, par exemple sous $3.10^4$ Pascals à 4,7 K et est introduit par un conduit 13 puis évacué après réchauffement par un conduit 14 passant dans l'arbre tournant 3 et sortant de la machine par un raccord tournant par exemple du type Johnston.

L'ensemble des éléments du stator et du rotor de la machine sont contenus dans une enveloppe 15 pourvue de flasques d'extrémité 16, 17 sur lesquels sont fixés des paliers 18 supportant l'arbre 3 du rotor.

L'enceinte cryogénique statorique 6 est fixée par un côté à l'un des flasques d'extrémité 16 au moyen d'un tube support 19 en un matériau à faible conductivité thermique et par l'autre côté à la périphérie de l'enveloppe grâce à un système de colonnettes non représenté, amortissant les vibrations.

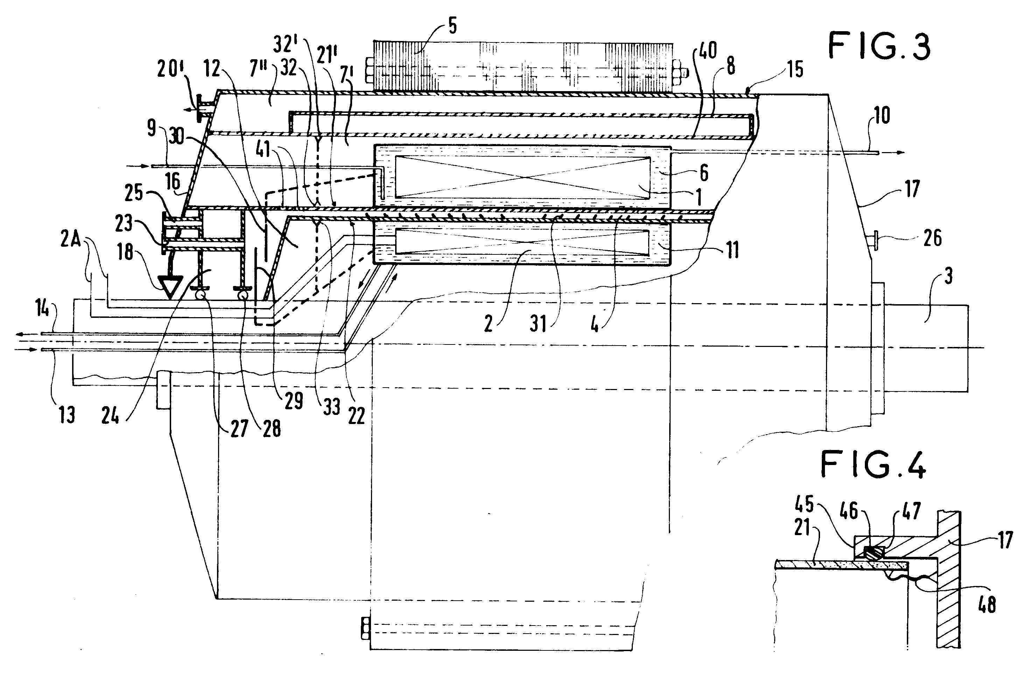

L'enceinte d'isolement thermique sous vide 7 de l'enceinte cryogénique statorique 6 est reliée par un conduit 20 à une source extérieure de vide et est séparée du volume d'entrefer 4 par un tube étanche 21 très mince dimensionné uniquement pour résister à la pression du volume d'entrefer 4 et fixé en bout de manière étanche aux flasques d'extrémités 16, 17 par des moyens permettant la dilatation axiale tels que le joint à piston qui sera décrit ultérieurement en regard de la figure 4.

L'enceinte cryogénique rotorique 11 est fixée à l'intérieur d'un tambour 22 délimitant l'enceinte d'isolement thermique 12 qui est sous vide scellé.

Le volume d'entrefer 4 est délimité, côté stator, par le tube étanche 21 et, côté rotor, par le tambour tournant 22, et relié par une conduite 23 à une pompe à vide permettant de le maintenir sous une faible pression de l'ordre de 1 à 10 Pascals.

Il est séparé de l'atmosphère ambiante, à chaque extrémité de l'axe 3 du rotor, par une chambre annulaire intermédiaire 24 remplie d'hélium gazeux à une pression légèrement supérieure à la pression atmosphérique grâce à une conduite d'amenée 25, 26 et rendu étanche au niveau de l'axe 3, du rotor par deux joints tournants successifs 27, 28.

Le joint tournant 28 séparant le volume d'entrefer 4 d'une chambre intermédiaire 24 est un joint à huile tenant à un vide peu poussé, suivi de pièges froids à vapeurs d'huile 29, 30 alimentés par les enceintes cryogéniques statorique et rotorique 6, 11.

Le remplissage du volume d'entrefer 4 par de l'hélium gazeux évite toute condensation sur la partie du tambour 22 en contact avec l'enceinte cryogénique rotorique 11. Les apports caloriques à ce niveau, engendrés par les pertes par frottement dues à la présence des vapeurs d'hélium dans le volume d'entrefer 4 sont diminués de deux manières d'une part, grâce à un filet 31 gravé en relief sur le tambour tournant 22 selon une double vis d'archimède qui tend à entraîner le gaz d'hélium vers les extrémités du volume d'entrefer 4 et d'autre part, grâce à des points froids 32, 33 placés de part et d'autre des enceintes cryogéniques statorique 6 et rotorique 11, à l'extérieur du tube 21 et à l'intérieur du tambour tournant 22.

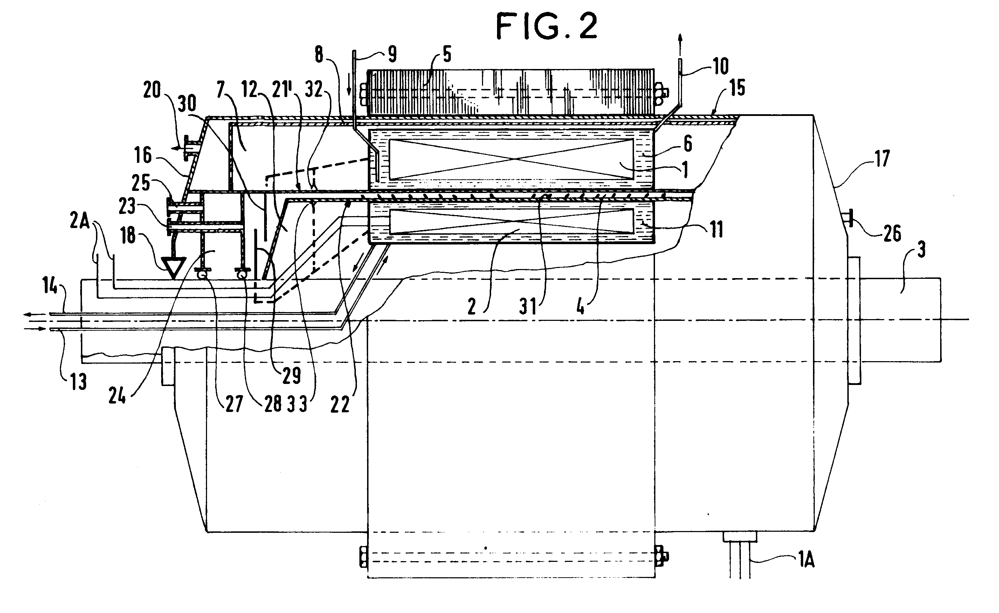

La figure 2 représente une variante de la machine représentée à la figure 1, qui en diffère par le mode de fixation de l'enceinte cryogénique statorique 6. Sur cette figure 2, les éléments non modifiés ont conservé leur indexation de la figure 1.

La modification consiste à faire supporter l'enceinte cryogénique statorique 6 directement par le tube étanche 21' qui délimite le volume d'entrefer 4 côté stator. Cela permet de supprimer le tube support spécial qui fixait l'un des côtés de l'enceinte statorique 6 à un flasque d'extrémité 16 de la machine ainsi que le système de fixation à colonnettes solidarisant l'autre côté de l'enceinte cryogénique statorique 6 avec la périphérie de l'enveloppe 15 de la machine. En éliminant ces pièces, on diminue les apports thermiques à l'enceinte cryogénique statorique 6 en provenance de l'extérieur avec, en contrepartie, une protection moindre à l'encontre des apports thermiques par conduction gazeuse dans le volume d'entrefer 4 et la nécessité de renforcer le tube étanche 21.

La figure 3 représente une autre variante de la machine représentée à la figure 1, qui en diffère par la configuration de l'enceinte d'isolement thermique de l'enceinte cryogénique statorique et par le mode de fixation de cette dernière enceinte cryogénique. Comme précédemment, les éléments non modifiés ont conservé leur indexation de la figure 1.

Dans cette variante, l'enceinte d'isolement thermique de l'enceinte cryogénique statorique 6 est partagée en deux chambres annulaires concentriques 7' et 7" par une cloison tubulaire étanche 40 fixée en bout aux deux flasque d'extrémité 16 et 17 de l'enveloppe 15 de la machine, l'enceinte cryogénique statorique 6 étant supportée, comme dans la variante précédente par le tube 21" délimitant le volume d'entrefer 4 côté stator.

La chambre concentrique intérieure 7', qui renferme l'enceinte cryogénique statique 6, est en communication avec le volume d'entrefer 4 par des orifices 41 percés au travers de la paroi du tube de séparation 21″, au voisinage de ses extrémités et est remplie d'un matériau isolant thermique en poudre, fibres ou mousse évitant les apports thermiques par conduction axiale au travers des vapeurs d'hélium basse pression.

La chambre concentrique extérieure 7″ est une chambre sous vide qui renferme l'écran thermique antiradiatif 8 et qui évite les apports thermiques de l'extérieur de la machine. Elle est reliée par un conduit 20′ à une pompe à vide. Sa structure est simplifiée du fait qu'elle n'est pas traversée par des conducteurs électriques ou des conduits d'hélium puisqu'elle est extérieure à l'enceinte cryogénique du stator.

Des points froids 32 et 32′ alimentés par l'enceinte cryogénique statorique 6 et placés de part et d'autre de cette dernière, dans la chambre concentrique intérieure 7′, contre la cloison tubulaire 40 et le tube de séparation 21″, récupèrent l'enthalpie des vapeurs d'hélium basse pression issues de l'enceinte cryogénique statorique 6, par un système non représenté sur la figure.

Dans les machines qui viennent d'être décrites, les tubes 21 21′, 21″ délimitant le volume d'entrefer 4 ainsi que la cloison tubulaire 40 sont fixés en bout à un flasque d'extrémité 17 par exemple de l'enveloppe 15 de manière à permettre une dilatation axiale grâce par exemple à l'emploi d'un joint à piston comme représenté à la figure 4 pour le tube 21.

Comme cela est visible sur la figure 4, l'un des flasques d'extrémité 17 de l'enveloppe de la machine est pourvu intérieurement d'une arête circulaire 45 dans laquelle s'emboîte avec un léger jeu l'extrémité du tube 21. Un joint annulaire 46 disposé dans une gorge latérale 47 à l'extrémité de l'arête circulaire 45 obstrue le jeu entre l'arête et l'extrémité du tube lorsqu'il est nécessaire de réaliser une étanchéité comme dans le cas des tubes 21 et 21′ ainsi que de la cloison tubulaire 40 tandis que des tresses souples 48 en matériau en bon conducteur de la chaleur relient le flasque d'extrémité 17 au bout du tube 21 pour assurer une égalisation des températures et maintenir le joint 46 à une température suffisante pour qu'il conserve sa pleine efficacité.

**Revendications**

1. Machine électrique tournante ayant un stator et un rotor à enroulements supraconducteurs disposés dans des enceintes cryogéniques distinctes, caractérisée en ce que :
   - les enceintes cryogéniques (6, 11) du stator et du rotor sont disposées chacune à l'intérieur d'une enceinte d'isolement thermique sous vide,
   - l'ensemble constitué par les enceintes d'isolement thermique (7, 12) est disposé à l'intérieur d'une enveloppe (15) pourvue de flasques d'extrémité (16, 17) afin d'isoler l'intérieur de l'enveloppe,
   - les enceintes d'isolement thermique du stator et du rotor sont séparées par un volume d'entrefer (4) à basse pression.

2. Machine selon la revendication 1, caractérisée en ce que l'enceinte d'isolement thermique sous vide du stator est séparée du volume d'entrefer (4) par une cloison (21) fixée aux flasques d'extrémité (16, 17) par des moyens de fixation autorisant une dilatation axiale.

3. Machine selon la revendication 2, caractérisée en ce que la cloison (21) est distincte des moyens (19) supportant l'enceinte cryogénique (6) du stator et dimensionnée uniquement pour résister à la basse pression du volume d'entrefer (4).

4. Machine selon la revendication 2, caractérisée en ce que lesdits moyens de fixation comportent un joint à piston (45, 46, 47) maintenu à température ambiante par des tresses souples (48) en matériau bon conducteur de la chaleur shuntant le joint à piston et reliées à l'un (17) des flasques d'extrémité.

5. Machine selon la revendication 1, caractérisée en ce que le volume d'entrefer (4) est à une pression comprise entre 1 et 10 Pascals de vapeurs d'hélium.

6. Machine selon la revendication 1, caractérisée en ce que l'enceinte d'isolement thermique sous vide (12) du rotor est délimitée, côté volume d'entrefer, par un tambour (22) présentant un filet (31) gravé en relief selon au moins une vis d'archimède pour entraîner le gaz présent dans le volume d'entrefer vers les extrémités de ce volume.

**Claims**

1. An electric rotating machine having a stator and a rotor fitted with superconducting windings disposed in separate cryogenic enclosures, characterized in that:
   - the cryogenic enclosures (6, 11) of the stator and of the rotor are disposed each inside an evacuated thermally insulating enclosure;
   - the assembly constituted of the thermally insulating enclosures (7, 12) is disposed inside an envelope (15), which is provided with terminal flanges (16, 17) so as to insulate the interior of the envelope;

- the thermally insulating enclosures of the stator and of the rotor are separated from one another by a magnetic gap volume (4) at low pressure.

2. A machine according to claim 1, characterized in that the evacuated thermally insulating enclosure of the stator is separated from the gap volume (4) by a partition (21) fixed to the terminal flanges (16, 17) by attachment means which admit axial expansion.

3. A machine according to claim 2, characterized in that said partition (21) is separate from the means (19) supporting the cryogenic enclosure (6) of the stator and is dimensioned solely to resist the low pressure of the gap volume (4).

4. A machine according to claim 2, characterized in that the attachment means include a piston seal (45, 46, 47) maintained at ambient temperature by flexible braids (48) made of material having a good thermal conductivity, which shunt said piston seal and which are connected to one (17) of the terminal flanges.

5. A machine according to claim 1, characterized in that the gap volume (4) is at a helium vapour pressure comprised in the range of 1 to 10 Pascals.

6. A machine according to claim 1, characterized in that the evacuated thermally insulating enclosure (12) of the rotor is delimited on the side of the gap volume by a drum (22) provided with a thread (31) embossed in the form of at least one archimedian screw in order to entrain the gas present in the gap volume towards the ends of said space.

**Patentansprüche**

1. Umlaufende elektrische Maschine mit einem Ständer und einem Rotor mit supraleitenden Wicklungen, die in getrennten Tiefsttemperaturhüllen angeordnet sind, dadurch gekennzeichnet, daß

- die Tiefsttemperaturhüllen (6, 11) des Ständers und des Rotors jeweils im Inneren einer unter Vakuum stehenden Wärmeisolationshülle angebracht sind,
- die beiden Wärmeisolationshüllen (7, 12) gemeinsam im Inneren einer Ummantelung (15) angeordnet ist, die zur Isolierung des Inneren der Ummantelung mit Endflanschen (16, 17) ausgestattet ist, und

- die Wärmeisolationshüllen des Ständers und des Rotors durch einen Luftspaltraum (4) mit niedrigem Druck voneinander getrennt sind.

2. Maschine nach Anspruch 1, dadurch gekennzeichnet, daß die unter Vakuum stehende Wärmeisolationshülle des Ständers von dem Luftspaltraum (4) durch eine Zwischenwand (21) getrennt ist, die an den Endflanschen (16, 17) durch Befestigungsmittel verbunden ist, die eine Axialausdehnung ermöglichen.

3. Maschine nach Anspruch 2, dadurch gekennzeichnet, daß die Zwischenwand (21) von den Mitteln (19) getrennt ist, welche die Tiefsttemperaturhülle (6) des Ständers tragen, und daß sie einzig im Hinblick auf die Widerstandsfähigkeit gegen den tiefen Druck in dem Luftspaltraum (4) bemessen ist.

4. Maschine nach Anspruch 2, dadurch gekennzeichnet, daß die Befestigungsmittel eine Kolbendichtung (45, 46, 47) aufweisen, die durch elastische Tressen (48) aus gut wärmeleitendem Material auf Umgebungstemperatur gehalten werden, wobei die Tressen die Kolbendichtung überbrücken und mit einem der Endflansche (17) verbunden sind.

5. Maschine nach Anspruch 1, dadurch gekennzeichnet, daμ der Luftspaltraum (4) unter einem Heliumdampfdruck zwischen 1 und 10 Pascal steht.

6. Maschine nach Anspruch 1, dadurch gekennzeichnet, daß die unter Vakuum stehende Wärmeisolationshülle (12) des Rotors auf Seiten des Luftspaltraums durch eine Trommel (22) begrenzt ist, die ein reliefartig gemäß mindestens einer archimedischen Spirale vorstehendes Gewinde (31) aufweist, um das in dem Luftspaltraum befindliche Gas zu den Enden der Kammer zu befördern.

FIG.1

EP 0 261 635 B1

FIG.2

FIG.3

FIG.4